# EUROPÄISCHE PATENTANMELDUNG

(11) **EP 1 716 958 A2**
(43) Veröffentlichungstag der Anmeldung: **02.11.2006**
(21) Anmeldenummer: 06001431.3
(22) Anmeldetag: 24.01.2006
(51) Int. Cl.: B23K 9/235, B23K 11/34, B23K 26/42, B23K 13/00, B23K 20/06

(54) **Verfahren zum Entzinken von kaltgewalzten verzinkten Profilen**

(30) Priorität: 25.04.2005 DE 102005019212
(71) Anmelder: Welser Profile AG, 3341 Ybbsitz (AT)
(72) Erfinder: Enöckl, Walter, 3340 Waidhofen an der Ybbs (AT)
(74) Vertreter: Grünecker, Kinkeldey, Stockmair & Schwanhäusser Anwaltssozietät

(57) **Zusammenfassung**

Die Erfindung betrifft ein Verfahren zum Entzinken eines kaltgewalzten verzinkten Profils, wobei mit hochfrequentem Strom die ursprünglich vorhandene Zinkschicht in einem definierten Bereich entfernt wird. Die Erfindung betrifft auch ein kaltgewalztes verzinktes Profil mit einem vorzugsweise verzinkten zylindrischen, an einer Seite, vorzugsweise an zwei Seiten, offenem Körper, wobei der Körper zumindest einen zinkfreien Körperbereich aufweist. Auch die Verwendung des Verfahrens zur Herstellung eines kaltgewalzten Profils ist Gegenstand der Erfindung.

## Beschreibung

Die Erfindung betrifft ein Verfahren zum Entzinken eines kaltgewalzten verzinkten Stahlprofils.

Häufig kommt es vor, dass an verzinkten Stahlprofilen, insbesondere an verzinkten Hohlprofilen andere Bauteile angeschweißt werden müssen. Ein typischer Anwendungsfall ist dabei, dass ein verzinktes Hohlprofil durch eine Kappe einseitig oder auch beidseitig verschlossen werden soll. Um eine einwandfreie Verschweißung des Endes des Hohlprofiles mit der Kappe zu erreichen, ist es in der Regel erforderlich, dass das Ende des Hohlprofiles entzinkt wird. Dies kann durch entsprechende Tauchbäder geschehen, was allerdings den Nachteil hat, dass der Fertigurigsprozess unterbrochen wird.

Aufgabe der vorliegenden Erfindung ist es daher, ein Verfahren der eingangs genannten Art so zu verbessern, dass das Entzinken des verzinkten Stahlprofiles kontinuierlich im Fertigungsprozess, beispielsweise auf einer Kaltwalzstraße erfolgen kann.

Diese Aufgabe wird erfindungsgemäß dadurch gelöst, dass das verzinkte Profil durch eine Hochfrequenzspule hindurchgeführt wird, so dass Bereiche des Profiles entzinkt werden.

Besonders vorteilhaft ist es, wenn die Länge des Bereichs, in dem die Zinkschicht abgelöst wird, kürzer ist, als die Schürze der später aufzuschweißenden Kappe. Auf diese Weise überlappen sich die verzinkten Bereiche der Kappe und des Profils, so dass eine spätere Korrosion vermieden wird.

In diesem Zusammenhang ist es auch günstig, wenn die Breite der umlaufenden Schweißnaht kleiner ist als die Länge des entzinkten Bereichs. Auf diese Weise wird erreicht, dass keine Verunreinigung der Schweißnaht durch eine Verzinkung erfolgt.

In diesem Zusammenhang ist ferner günstig, wenn die Innenseite der Kappe zumindest im Bereich der Schürze unverzinkt ist.

Im folgenden wird ein Ausführungsbeispiel der Erfindung anhand einer Zeichnung näher erläutert: Es zeigen:
- Fig. 1: eine schematische Querschnittsansicht eines kaltgewalzten verzinkten Hohlprofils mit einem Körper und einer aufgebrachten Kappe,
- Fig. 2: den Körper des Profils der Fig. 1,
- Fig. 3: eine Kappe des Profils gemäß der Figuren 1 und 2,
- Fig. 4: eine Spule, die um den zu entzinkenden Bereich des Körpers des Profils gemäß der Figuren 1 bis 3 gelegt ist.

In allen Figuren werden für die selben Elemente die selben Bezugszeichen verwendet.

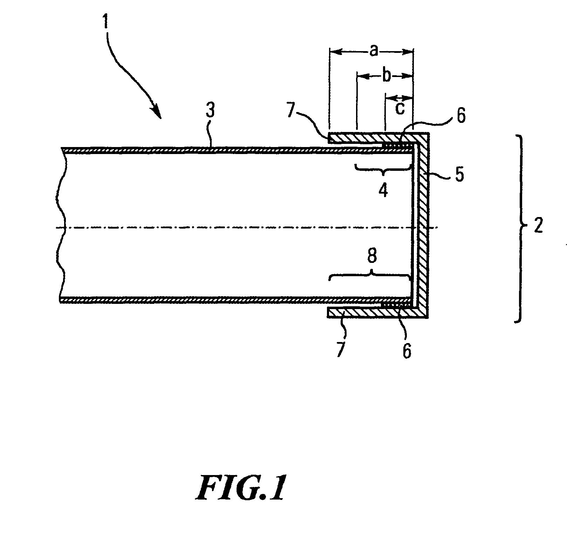

Fig. 1 zeigt schematisch das kaltgewalzte verzinkte Hohlprofil 1 mit einem Körper 3, der einen zinkfreien Körperbereich 4 aufweist, zusammengebaut mit einer Kappe 5, die die Enden des Körpers 3 umgreift. Die Kappe 5 hat einen Hohlquerschnitt und ist jedoch auf einer Seite geschlossen. Der Körper 3 ist ebenso hohlquerschnittsförmig ausgestaltet, jedoch auf beiden Seiten offen. Der Außendurchmesser des Körpers 3 ist etwas kleiner als der Innendurchmesser der Kappen. Der Endbereich der Kappe bildet eine Schürze 7. Zwischen der Schürze 7 und der Außenseite des Körpers 3 ist in einem Bereich jeweils auf einer Seite des Körpers 3 eine Schweißnaht 6 angebracht. Die Schweißnaht 6 verbindet die Kappe 5 mit dem Körper 3.

Sowohl der Körper 3 als auch die Kappe 5 besteht aus verzinktem Stahlblech. Der Körper 3 ist auf der Außenseite im Körperbereich 4 zinkfrei ausgestaltet. Die Kappe 5 ist zumindest auf der Innenseite in einem Kappenbereich 8 zinkfrei ausgestaltet. Die axiale Länge, d.h. die Länge parallel zur Längsrichtung des Körpers 3 ist als Länge b dargestellt. Die Längsachse des Körpers 3 ist konzentrisch zur Längsachse der Kappe 5. Die axiale Länge oder auch Breite der Schweißnaht 6 ist als Länge c dargestellt. Die axiale Länge des Kappenbereichs 8 ist als axiale Länge a dargestellt. Es ist klar zu sehen, dass a > b > c ist. Dadurch ist sichergestellt, dass die Schweißnaht 6 sowohl bezüglich der Kappe 5 als auch des Körpers 3 in einem zinkfreien Bereich, nämlich dem Kappenbereich 8 und dem Körperbereich 4 positionierbar ist. Die Schweißnaht 6 ist auf unterschiedliche Weise einbringbar. Eine Möglichkeit ist etwa durch Induktionsschweißen. Das Hineinschieben der Kappe 5 in das Innere des Körpers 3 ist jedoch ebenso praktikabel. Dann ist der Körperbereich 4, der zinkfrei ist auf der Innenseite des Körpers 3 so auszugestalten, und der zinkfreie Kappenbereich 8 auf der Außenseite in der Schürze 7 auszugestalten. Als Ausgangsmaterial für die Kappe bietet sich ein nur einseitiges verzinktes Blech an.

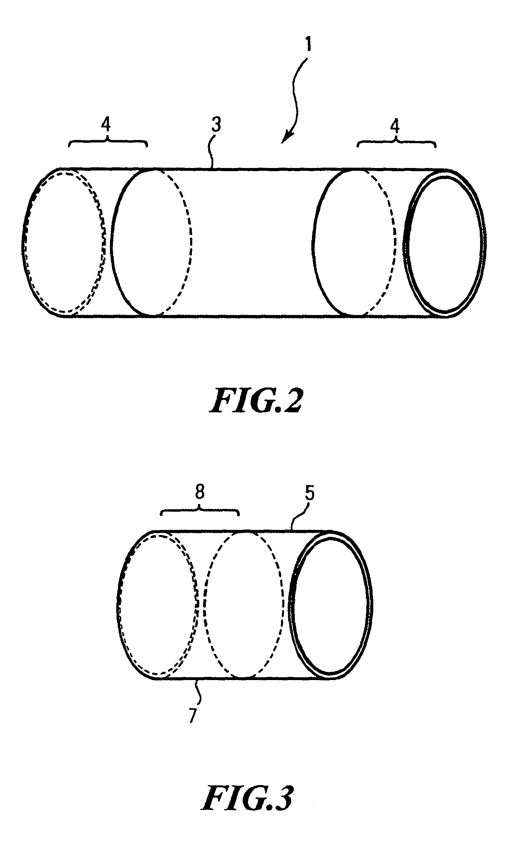

Die Figuren 2 und 3 zeigen die Position des Körperbereichs 4 und des Körperbereichs 8 an. Beide Bereiche sind zinkfrei ausgestaltet.

Aus Fig. 2 ist zu sehen, dass die zueinander symmetrischen Körperbereiche 4 an den Enden des Körpers 3 ausgestaltet sind. Der Kappenbereich 8 ist an dem offenen Ende der Kappe 5, nämlich im Bereich der Schürze 7, ausgehend von dem offenen Ende der Kappe 5 angeordnet.

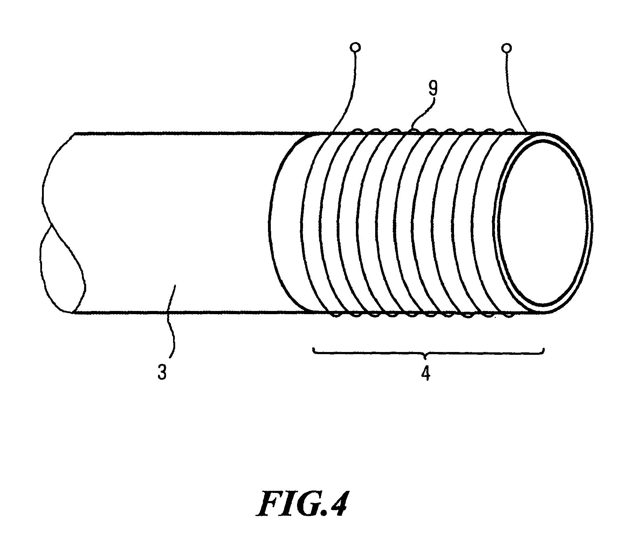

Die Fig. 4 zeigt die Entzinkung mittels hochfrequentem Strom, und zwar mittels Induktion, wobei eine Spule 9 auf der Außenseite des Körpers 3 angelegt ist und die Entzinkung hervorruft.

Die Spule umgibt den zu entzinkenden Bereich des Körpers 3. Sie ist zum Material des Körpers 3 beabstandet. Durch die Spule fließt hochfrequenter Strom, der eine Induktion hervorruft.

## Patentansprüche

1. Verfahren zum Entzinken eines kaltgewalzten verzinkten Stahlprofils, **dadurch gekennzeichnet, dass** die Zinkschicht durch Einführen des Stahlprofils in eine Hochfrequenzspule zumindest bereichsweise entfernt wird.

2. Verfahren nach Anspruch 1, **dadurch gekennzeichnet, dass** das Stahlprofil ein Hohlprofil (1) ist.

3. Verfahren nach Anspruch 1 oder 2, **dadurch gekennzeichnet, dass** jeweils die Enden des Stahlprofils entzinkt werden.

4. Verfahren nach einem der Ansprüche 1 bis 3, **dadurch gekennzeichnet, dass** zumindest ein Ende des Stahlprofils mit einer, das Stahlprofil von außen mit einer Schürze umgebenden Kappe (5) verschweißt wird.

5. Verfahren nach einem der Ansprüche 1 bis 4, **dadurch gekennzeichnet, dass** die Länge der Schürze der Kappe (5) eine axiale Länge (a) aufweist, die größer ist, als die axiale Länge (b) des entzinkten Bereichs (4), welche wiederum größer ist als die Breite (b) der umlaufenden Schweißnaht (6) der Kappe (5).

6. Verfahren nach einem der Ansprüche 1 bis 5, **dadurch gekennzeichnet, dass** das Hohlprofil (1) ein zylindrisches Rohr ist.
